**Europäisches Patentamt**

(19) **European Patent Office**

**Office européen des brevets**

(11) Veröffentlichungsnummer: **0 017 913**
**B1**

(12) **EUROPÄISCHE PATENTSCHRIFT**

(45) Veröffentlichungstag der Patentschrift:
13.04.83

(21) Anmeldenummer: **80101905.0**

(22) Anmeldetag: **10.04.80**

(51) Int. Cl.³: **B 60 K 1/00**, B 62 D 51/02

(54) Elektrofahrzeug.

(30) Priorität: **14.04.79 DE 2915387**

(43) Veröffentlichungstag der Anmeldung:
**29.10.80 Patentblatt 80/22**

(45) Bekanntmachung des Hinweises auf die Patenterteilung:
**13.04.83 Patentblatt 83/15**

(84) Benannte Vertragsstaaten:
**AT BE CH DE FR GB IT LI LU NL SE**

(56) Entgegenhaltungen:
**DE-A-2 304 107**
**DE-U-1 942 807**
**DE-U-7 701 751**
**US-A-1 832 018**
**US-A-3 117 648**
**US-A-3 289 780**
**US-A- 3 506 080**
**VDI-Zeitschrift, Band 117, Nr. 22, November 1975, Düsseldorf A. WECKENMANN et al. »Das Fahrrad mit Elektroantrieb« Seiten 1051 bis 1055.**

(73) Patentinhaber: **Eichholz, Heinz, Speller Strasse 31, D-4441 Schapen (DE)**

(72) Erfinder: **Eichholz, Heinz, Speller Strasse 31, D-4441 Schapen (DE)**

(74) Vertreter: **Schulze Horn, Stefan, Dipl.-Ing. et al, Patentanwälte Dipl.-Ing. S. Schulze Horn M.SC. Dr. H. Hoffmeister Goldstrasse 36, D-4400 Münster (DE)**

## Elektrofahrzeug

Die Erfindung bezieht sich auf ein Elektrofahrzeug, bestehend aus einem Fahrgestell mit zwei Hinterrädern und einem gelenkten, von einem Elektromotor angetriebenen Vorderrad, einer zwischen den Rädern angeordneten Trittfläche für einen stehenden Benutzer und mit einem fußbetätigten als Trittfläche dienenden Geschwindigkeitssteuerungselement.

Aus der DE-A-2 304 107 ist bereits ein solches Elektro-Kleinfahrzeug bekannt, bei welchem auf einer zwischen oder über den Rädern befindlichen Plattform eine Standfläche für eine Person vorhanden ist und wobei die Bewegung des motorgetriebenen Fahrzeugs mittels einer Lenkstange und einer Standbremse steuerbar ist. Nachteilig ist bei diesem Elektrofahrzeug aber, daß es für einen ungeübten Benutzer nur schwierig zu bedienen ist, da die Kontrollfunktionen für die Fahrt nicht der natürlichen Reaktion einer Person angepaßt sind.

Bei einem Elektrofahrzeug nach der US-A-3 506 080 ist weiterhin in der Trittfläche ein fußbetätigter Knopf zum Schalten der Batterie und zur Geschwindigkeitssteuerung des Elektromotors vorgesehen. Die Bremsbetätigung erfolgt durch einen Handhebel an der Lenkstange. Bei einem anderen Elektrofahrzeug, bei dem der Fahrer jedoch sitzt, erfolgt die Bremsbetätigung mittels eines Fußhebels, während die Fahrsteuerung von der Lenkstange aus bedient wird (US-A-3 289 780). Diese bekannten Fahrzeuge sind etwas schwierig zu handhaben. Dadurch, daß Bedienungselemente am Lenker angeordnet sind, sind sie nicht ohne weiteres zerlegbar. Sie können daher nur schwer im Kofferraum eines Kraftfahrzeuges mitgeführt werden. Die Benutzung erfordert einige Erfahrung, und eine Benutzung durch Ungeübte, z. B. auf Flughäfen und großen Ausstellungshallen, ist daher nicht möglich. Weiterhin ist aus der US-A-3 117 648 ein Elektrofahrzeug mit einem kombinierten Steuerungselement bekannt, das aus zwei etwa rechtwinklig zueinander angeordneten Pedalen zur Geschwindigkeitssteuerung und Bremsbetätigung besteht. Dieses bekannte Fahrzeug ist jedoch ebenfalls für einen sitzenden Benutzer vorgesehen, und das senkrecht aus der Trittfläche emporstehende Beschleunigungspedal kann auch von einem stehenden Benutzer nur schwierig bedient werden. Es ist Aufgabe der Erfindung, ein Elektrofahrzeug für einen stehenden Benutzer zu schaffen, dessen Handhabung und Transport einfacher sind. Das Fahrzeug soll durch ungeübte Benutzer und insbesondere auch durch gehbehinderte Personen sicher bedient werden können.

Diese Aufgabe wird bei einem Elektrofahrzeug der eingangs genannten Art erfindungsgemäß dadurch gelöst, daß das Steuerungselement durch einen Teil der Trittfläche gebildet wird, der als Wippenpedal zur Steuerung des Elektromotors durch Absenken des vorderen Teils und zur Bremsbetätigung durch Absenken des hinteren Teils gestaltet ist.

Um insbesondere Gehbehinderten den Gebrauch zu erleichtern, ist das Wippenpedal vorteilhaft auf einer Querstange quer zur Längsachse des Fahrzeugs verschiebbar. Der Benutzer kann also seinen Bedürfnissen entsprechend das Wippenpedal auf die linke oder rechte Seite der Trittfläche schieben.

Die Handhabung des Fahrzeugs wird weiterhin vorteilhaft durch eine mittels des Wippenpedals zu betätigende elektronische Regeleinrichtung zur stufenlosen Einstellung der Fahrgeschwindigkeit erleichtert. Spannungsverluste durch die Regeleinrichtung können dabei durch einen Schalter im Bereich des Wippenpedals vermieden werden, der bei der vorderen Endstellung des Wippenpedals einen direkten Stromkreis zwischen der Batterie und dem Elektromotor schließt. Hierdurch steht also bei maximaler Fahrgeschwindigkeit die volle Batteriespannung zum Antrieb zur Verfügung. Eine elektronische Regeleinrichtung mit Schalter zur direkten Stromversorgung ist als Fahrradantrieb bereits bekannt aus der VDI-Zeitschrift 117 (1975) Nr. 22, S. 1051 bis 1055.

Zweckmäßigerweise weist das Elektrofahrzeug zwei durch das Wippenpedal zu betätigende, den Hinterrädern unter Federbelastung anliegende Bremsen auf. Durch die Federbelastung der Bremsen ist auf an sich bekannte Weise (US-A-3 117 648) sichergestellt, daß das Fahrzeug in jedem Fall zum Stillstand kommt, wenn das Wippenpedal unbelastet ist.

Der Transport des Fahrzeugs wird erleichtert, wenn der Lenker abnehmbar ist, was an sich ebenfalls bekannt ist, durch die erfindungsgemäße Vermeidung von Steuerungselementen am Lenker aber in besonders einfacher Weise ermöglicht ist.

Im folgenden wird ein Ausführungsbeispiel der Erfindung anhand der Zeichnung näher erläutert. Es zeigt

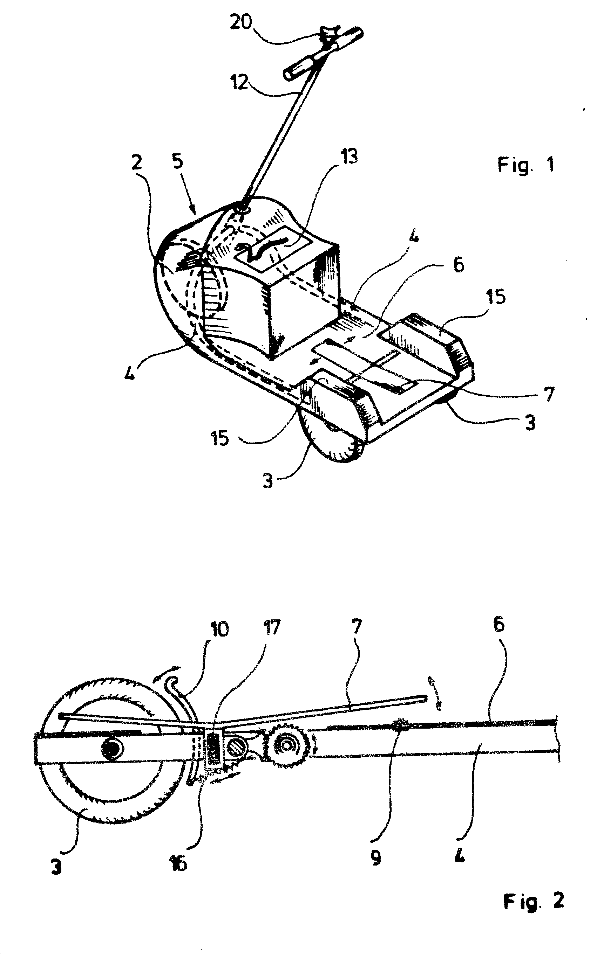

Fig. 1 ein erfindungsgemäßes Elektrofahrzeug in perspektivischer Darstellung,

Fig. 2 im Detail das Wippenpedal zur Steuerung des Motors und zur Betätigung der Bremsen,

Fig. 3 die Anordnung des Motors und

Fig. 4 den Batteriehalter mit eingesetzter Batterie.

Das Elektrofahrzeug besteht im wesentlichen aus einem Fahrgestell 4 mit zwei Hinterrädern 3 und einem gelenkten, von einem Elektromotor angetriebenen Vorderrad 2. Die Verkleidung 5 des Fahrzeuges ist so gestaltet, daß sich zwischen den Hinterrädern 3 eine Trittfläche 6 für den Benutzer ergibt. Ein Teil dieser Trittfläche 6 ist als Wippenpedal 7 zur Steuerung des Elektromotors und zur Betätigung der Bremsen 10 gestaltet.

In eine Vertiefung der Verkleidung 5 ist ein Batteriehalter 13 zusammen mit einer Batterie eingeschoben.

Durch Absenken des vorderen Teils des Wippenpedals 7 kann mittels einer nicht dargestellten elektronischen Regeleinrichtung die Geschwindigkeit des Fahrzeuges stufenlos eingestellt werden. In der Endstellung des Wippenpedals 7 betätigt dieses einen Schalter 9, der einen direkten Stromkreis zwischen der Batterie und dem Elektromotor schließt. Durch Absenken des hinteren Teils des Wippenpedals werden die unter Radkästen 15 angeordneten Bremsen 10 betätigt. Bei waagerechter Stellung des Wippenpedals 7 werden die Bremsen 10 durch Federn 16 belastet, so daß das Fahrzeug nicht wegrollen kann, wenn es nicht benutzt wird. Das Wippenpedal 7 ist an einer Querstange 17 befestigt, auf der es entsprechend den Wünschen des Benutzers nach rechts oder links geschoben werden kann.

Der Lenker 12 kann nach Lösen einer Schraube 20 zum Transport leicht abgenommen werden.

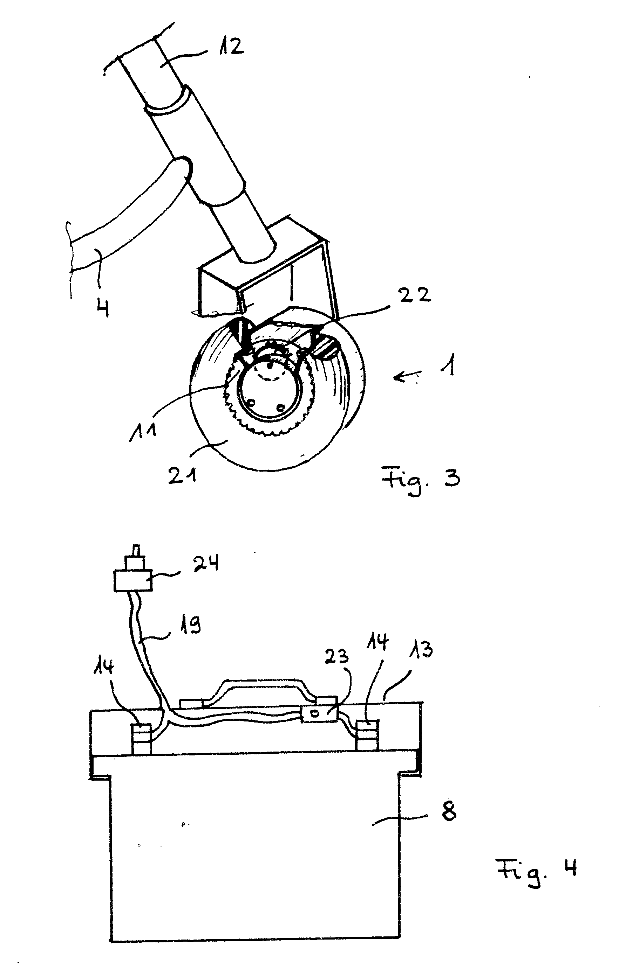

Gemäß Fig. 3 ist der Motor 1 innerhalb des Vorderrades 2 angeordnet. Eine zylindrische Ummantelung 11 des Motors 1 dient als Felge und trägt auf ihrer Außenseite den Reifen 21. An ihrer Innenseite wird die Ummantelung 11 unter Zwischenschaltung eines Getriebes von einem Ritzel 22 angetrieben. Das Getriebe kann z. B. ein Übersetzungsverhältnis von 1 : 7 haben. Durch diese Motoranordnung wird ein besonders günstiger Schwerpunkt des Elektrofahrzeuges erreicht und in Zusammenhang mit dem Wippenpedal 7 ergibt sich eine besonders leichte Handhabbarkeit.

Die Batterie 8 ist in einem leicht abnehmbaren und wieder anbringbaren Halter 13 angeordnet. Die Batteriepole 14 sind unter Zwischenschaltung einer Sicherung 23 über Kabel 19 mit einem Stecker 24 verbunden. Der Stecker 24 ist als Koaxialstecker ausgebildet und wird in eine entsprechende Buchse am Fahrgestell 4 eingeführt. Hierdurch wird eine falsche Polung der Batterie 8 ausgeschlossen, und das Einsetzen, Entnehmen und Laden derselben werden sehr erleichtert.

**Patentansprüche**

1. Elektrofahrzeug, bestehend aus einem Fahrgestell (4) mit zwei Hinterrädern (3) und einem gelenkten, von einem Elektromotor (1) angetriebenen Vorderrad (2), einer zwischen den Rädern (2, 3) angeordneten Trittfläche (6) für einen stehenden Benutzer und mit einem fußbetätigten als Trittfläche dienenden Geschwindigkeitssteuerungselement (7), dadurch gekennzeichnet, daß das Steuerungselement durch einen Teil der Trittfläche (6) gebildet wird, der als Wippenpedal (7) zur Steuerung des Elektromotors durch Absenken des vorderen Teils und zur Bremsbetätigung durch Absenken des hinteren Teils gestaltet ist.

2. Elektrofahrzeug nach Anspruch 1, dadurch gekennzeichnet, daß das Wippenpedal (7) auf einer Querstange (17) quer zur Längsachse des Fahrzeugs verschiebbar ist.

3. Elektrofahrzeug nach Anspruch 1 oder 2, gekennzeichnet durch eine mittels des Wippenpedals (7) zu betätigende elektronische Regeleinrichtung zur stufenlosen Einstellung der Fahrgeschwindigkeit.

4. Elektrofahrzeug nach Anspruch 3, gekennzeichnet durch einen Schalter (9) im Bereich des Wippenpedals (7), der bei der vorderen Endstellung des Wippenpedals (7) einen direkten Stromkreis zwischen der Batterie und dem Elektromotor schließt.

5. Elektrofahrzeug nach einem der Ansprüche 1 bis 4, gekennzeichnet durch zwei durch das Wippenpedal (7) zu betätigende, den Hinterrädern (3) unter Federbelastung anliegende Bremsen (10).

6. Elektrofahrzeug nach einem der Ansprüche 1 bis 5, dadurch gekennzeichnet, daß der Lenker (12) abnehmbar ist.

7. Elektrofahrzeug nach einem der Ansprüche 1 bis 6, dadurch gekennzeichnet, daß der Motor (1) innerhalb des Vorderrades (2) angeordnet ist, wobei eine zylindrische Ummantelung (11) des Motors (1) als Felge dient, die auf ihrer Außenseite den Reifen (21) trägt und an ihrer Innenseite unter Zwischenschaltung eines Getriebes von dem Motor (1) angetrieben wird.

8. Elektrofahrzeug nach einem der Ansprüche 1 bis 7, dadurch gekennzeichnet, daß die Batterie (8) in einem leicht abnehmbaren und wieder anbringbaren Halter (13) angeordnet ist, wobei die Batteriepole (14) unter Zwischenschaltung einer Sicherung (23) über Kabel (19) mit einem Stecker (24) verbunden sind.

**Claims**

1. Electrically propelled vehicle consisting in a chassis with two rear wheels and a controlled front wheel driven by an electric motor, in a tread for a standing user with a pedal speed control means, characterized in that the control means consists in a part of the tread (6), which is a rocker pedal (7) for the control of the electric motor by lowering the front part and for brake operation by lowering the rear part of it.

2. Electrically propelled vehicle according to claim 1, characterized in that the rocker pedal (7) is movable on a crossbar (17) laterally to the longitudinal axis of the vehicle.

3. Electrically propelled vehicle according to claims 1 or 2, characterized by an electronic control unit operated by the rocker pedal (7) for a continuous adjustment of the driving speed.

4. Electrically propelled vehicle according to claim 3, characterized by a switch (9) in the range or rocker pedal (7), which closes a direct electric circuit between battery and electric motor when the rocker pedal (7) is in its final front position.

5. Electrically propelled vehicle according to one of the claims 1 to 4, characterized by two brakes (10) sitting close to the rear wheels under spring loading and being operated by the rocker pedal (7).

6. Electrically propelled vehicle according to one of the claims 1 to 5, characterized in that the pitman (12) is removable.

7. Electrically propelled vehicle according to one of the claims 1 to 6, characterized in that the motor (1) is located within the front wheel (2), a cylindrical shell (11) of the motor (1) serving as rim, which bears on its exterior the tire (21) and which, on its inner side is run by the motor (1) by insertion of a gear box.

8. Electrically propelled vehicle according to one of the claims 1 to 7, characterized in that the battery (8) is placed in a holder (13) which can easily be removed and replaced, the battery poles (14) being connected via cable (19) to a plug (24) by insertion of a fuse (23).

**Revendications**

1. Véhicule à propulsion électrique composé d'un châssis avec deux roues arrières et une roue avant guidée et commandée par un moteur électrique, d'un marchepied situé entre les roues, prévu pour un usager en position debout et pourvu d'un élément régulateur de vitesse commandé au pied, caractérisé en ce que l'élément régulateur consiste en une partie du marchepied (6), celui-ci étant une pédale à bascule (7) contrôlant le moteur électrique quand la partie avant de la pédale est baissée et actionnant les freins quand la partie arrière est baissée.

2. Véhicule à propulsion électrique selon la revendication 1, caractérisé en ce que la pédale à bascule (7) coulisse sur une barre transversale (17), de biais par rapport à l'axe longitudinale du véhicule.

3. Véhicule à propulsion électrique selon la revendication 1 ou 2, caractérisé par un système régulateur électrique commandé par la pédale à bascule (7) et servant à ajuster de façon progressive la vitesse de marche.

4. Véhicule à propulsion électrique selon la revendication 3, caractérisé par un interrupteur (9) près de la pédale à bascule (7), cet interrupteur (9) fermant un circuit électrique direct entre la batterie et le moteur électrique quand la pédale à bascule (7) se trouve dans sa position finale avant.

5. Véhicule à propulsion électrique selon l'une des revendications 1 à 4, caractérisé par deux freins (10) commandés par la pédale à bascule (7) et collés aux roues arrières (3) sous l'action d'un ressort.

6. Véhicule à propulsion électrique selon l'une des revendications 1 à 5, caractérisé en ce que le bras oscillant (12) est amovible.

7. Véhicule à propulsion électrique selon l'une des revendications 1 à 6, caractérisé en ce que le moteur se trouve à l'intérieur de la roue avant (2), une gaine cylindrique (11) du moteur (1) servant de jante, celle-ci portant le pneu (21) sur sa face extérieure et étant commandée par le moteur (1) sur sa face interne au moyen de l'insertion d'une transmission.

8. Véhicule à propulsion électrique selon l'une des revendications 1 à 7, caractérisé en ce que la batterie (8) est placée dans un support (13) facile à démonter et à installer, les pôles de la batterie (14) étant connectés à une fiche (24) par un cable (19) au moyen de l'insertion d'un fusible (23).

Fig. 1

Fig. 2

Fig. 3

Fig. 4